Europäisches Patentamt

**European Patent Office**

**Office européen des brevets**

(11) Veröffentlichungsnummer : **0 037 466**
**B1**

(12) **EUROPÄISCHE PATENTSCHRIFT**

(45) Veröffentlichungstag der Patentschrift :
07.12.83

(51) Int. Cl.³ : **B 60 P   7/13**

(21) Anmeldenummer : **81101719.3**

(22) Anmeldetag : **09.03.81**

(54) **Verriegelung für Container.**

(30) Priorität : **05.04.80 DE 3013371**

(43) Veröffentlichungstag der Anmeldung :
**14.10.81 Patentblatt 81/41**

(45) Bekanntmachung des Hinweises auf die Patenterteilung : **07.12.83 Patentblatt 83/49**

(84) Benannte Vertragsstaaten :
**AT BE CH FR GB IT LI NL SE**

(56) Entgegenhaltungen :
**DE-A- 1 930 482**
**DE-A- 2 049 927**
**DE-U- 67 503 66**
**GB-A- 1 200 243**
**GB-A- 1 217 486**
**GB-A- 1 217 487**
**GB-A- 1 283 795**

(73) Patentinhaber : **Gerd Schulz Fahrzeug- und Container-Technik**
**Besselstrasse 9**
**D-2100 Hamburg 90 (DE)**

(72) Erfinder : **Schulz, Gerd**
**Besselstrasse 9**
**D-2100 Hamburg 90 (DE)**
Erfinder : **Hartleif, Hans-Peter**
**Rotbergskamp 20c**
**D-2100 Hamburg 90 (DE)**

(74) Vertreter : **Eisenführ & Speiser**
**Martinistrasse 24**
**D-2800 Bremen 1 (DE)**

EP 0 037 466 B1

## Verriegelung für Container

Die Erfindung betrifft eine Verriegelung für Container, bestehend aus einem Gehäuse mit Aufstandsfläche für einen Container-Eckbeschlag, aus einem von oben durch die Aufstandsfläche in eine Ausnehmung des Gehäuses einsetzbaren und in der Ausnehmung bewegbaren Führungselement mit nach oben ragenden Führungssegmenten zum Eingriff in den Eckbeschlag und aus einem mit Hammerkopf und Spannmutter versehenen Spannbolzen, der das Führungselement durchsetzt und der durch einen das Gehäuse seitlich durchsetzenden Einschnitt in das Gehäuse einsetzbar ist.

Eine derartige Verriegelung ist aus dem DE-U-67 50 366 bekannt. Verriegelungen dieser Art werden vielfach im Schienenverkehr an Waggons für den Containertransport verwendet. Sie ermöglichen ein Trennen von Einsatz und Gehäuse. Dies hat den Vorteil, daß für jeden Waggon weniger Einsätze als Gehäuse benötigt werden und somit eine entsprechende Einsparung möglich ist, da zwar ein Waggon oder ein anderes Fahrgestell die Möglichkeit bieten muß, Container unterschiedlicher Standardlängen aufzunehmen oder auch mehrere Container, gleichwohl aber zu jedem beliebigen Zeitpunkt nie mehr als vier funktionsfähige Verriegelungen pro Container benötigt.

Die bekannten Verriegelungen haben sich im Prinzip bewährt. Der Erfindung lag jedoch die Aufgabe zugrunde, die Sicherheit dieser Verriegelungen zu verbessern, und zwar die Sicherheit beim Transport von Containern wie auch bei der Benutzung ohne aufsitzenden Container.

Zur Lösung dieser Aufgabe wird die eingangs beschriebene Verriegelung erfindungsgemäß dadurch weitergebildet, daß am Führungselement eine Sperre und im Bereich der Ausnehmung im Gehäuse eine Aufnahme für diese Sperre vorgesehen ist, daß Sperre und Aufnahme eine das Einsetzen und Herausnehmen des Führungselementes unterbindende Formschluß-Verbindung zwischen Führungselement und Gehäuse bilden und daß die Formschluß-Verbindung durch Bewegung des Führungselementes aus seiner das Herausnehmen aus dem Gehäuse ermöglichenden Position in mindestens eine Betriebsstellung herstellbar ist.

Erreicht wird hierdurch während des Container-Transportes, daß die Führungssegmente ihre Lage relativ zu Gehäuse und Container unter allen Umständen beibehalten, und zwar unabhängig davon, ob die Spannmutter in ihrer vorgeschriebenen Spannstellung steht oder aber durch ein Versehen oder aus anderem Grund gelöst ist. Der Grund für diese erhöhte Sicherheit liegt darin, daß das die Führungssegmente tragende Führungselement bei aufsitzendem Container eine definierte Position einnimmt, in der es nicht nach oben aus der Ausnehmung herauswandern kann, während es gleichzeitig vom Container in dieser Position festgehalten wird. Selbst bei ungünstigster Ausschöpfung aller Toleranzen von Container und Container-Eckbeschlägen sowie der Verriegelung kann es deshalb nicht geschehen, daß das Führungselement unbeabsichtigt in diejenige seiner möglichen Positionen wandert, in der die Sperre gelöst ist und das Führungselement nach oben aus der Ausnehmung heraustreten kann.

Zwar ist das mit einem ungewollten Herausgelangen des Führungselementes aus der Gehäuse-Ausnehmung verbundene Risiko wesentlich geringer, wenn der Gehäuseeinsatz nicht benötigt wird, wenn also einmal kein Container mittels des Einsatzes festgespannt sein sollte, der Einsatz aber gleichwohl im Gehäuse verbleiben soll. Aber auch der Ersatz eines verlorengegangenen Einsatzes erfordert einen nicht unerheblichen Aufwand. Die vorgeschlagene Lösung erhöht jedoch auch hier die Sicherheit mindestens dadurch, daß das Führungselement nur noch in einer genau bestimmten Position nach oben aus der Ausnehmung herausgelangen kann, in allen anderen Positionen jedoch von der Sperre festgehalten wird, wenn die Spannmutter einmal nicht — wie vorgeschrieben — angezogen sein sollte.

Hinzu kommt gegenüber dem Stand der Technik eine Gewichtsverminderung durch den Fortfall des dort vorgesehenen Gegenspannteils. Dieser Fortfall führt weiterhin zu einer Vereinfachung der Handhabung beim Einsetzen des Einsatzes in das Gehäuse.

In den Unteransprüchen 2 und 3 sind zwei Varianten von Sperren und Aufnahmen hierfür angegeben, die alternativ oder additiv vorgesehen sein können. Zur Sicherheitserhöhung dient darüberhinaus vor allem die in Anspruch 5 aufgeführte relative Dimensionierung, weil hierdurch zum Herausnehmen des Einsatzes eine weitere Bedingung erfüllt sein muß, nämlich die Bedingung, daß der Hammerkopf zwischen den Führungssegmenten liegen muß. Bei Einhaltung dieser Vorschrift ist es nicht möglich, den Einsatz herauszunehmen, wenn sich der Hammerkopf in der Zentrierstellung des Verschlusses befindet, in der seine Spannpratzen auf den Führungssegmenten aufliegen. Die Bewegbarkeit des Einsatzes in vertikaler Richtung ist dann kleiner als die Dicke des Führungselementes, so daß dieses nicht aus seiner Ausnehmung herausgelangen kann.

Die Erfindung ist nachstehend unter Bezugnahme auf zwei in der Zeichnung dargestellte Ausführungsbeispiele erläutert. Es zeigen :

Figur 1 einen Längsschnitt durch ein erstes Ausführungsbeispiel einer Verriegelung mit in Zentrierstellung stehendem Hammerkopf ;

Figur 2 einen Querschnitt durch die Verriegelung gemäß Fig. 1 mit gestrichelt dargestellter Position der den Einsatz bildenden Teile vor dem Herausnehmen aus dem Gehäuse ;

Figur 3 eine Draufsicht auf das Gehäuse mit eingesetztem Führungselement, das sich in einer seiner dort möglichen beiden Betriebsstellungen befindet ;

Figur 4 einen Schnitt entlang der Linie IV-IV in Fig. 3, in dem aus Gründen der Übersichtlichkeit jedoch nur die in der Schnittebene liegenden Linien dargestellt sind ;

Figur 5 eine der Fig. 3 ähnliche Draufsicht auf ein anderes Ausführungsbeispiel ;

Figur 6 einen der Fig. 2 entsprechenden Querschnitt durch das zweite Ausführungsbeispiel der Verriegelung und

Figur 7 einen Teil-Längsschnitt durch die zweite Ausführungsform der Verriegelung zur Veranschaulichung der Herausnehm-Sicherheit bei schräg stehendem Einsatz.

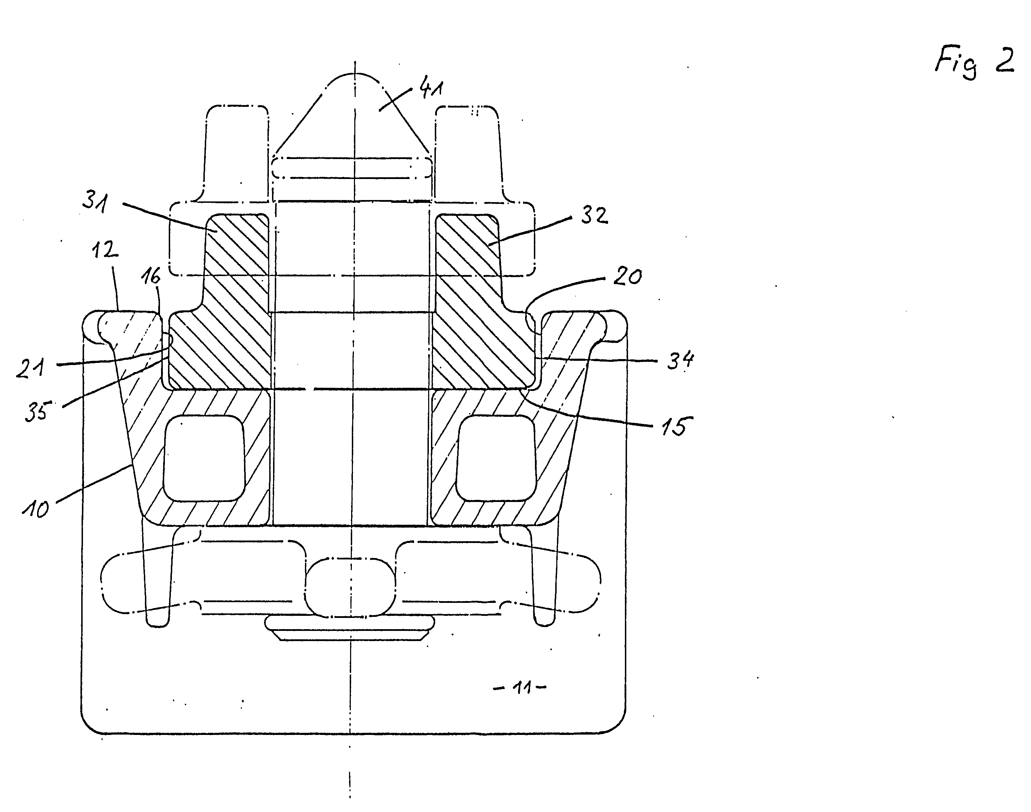

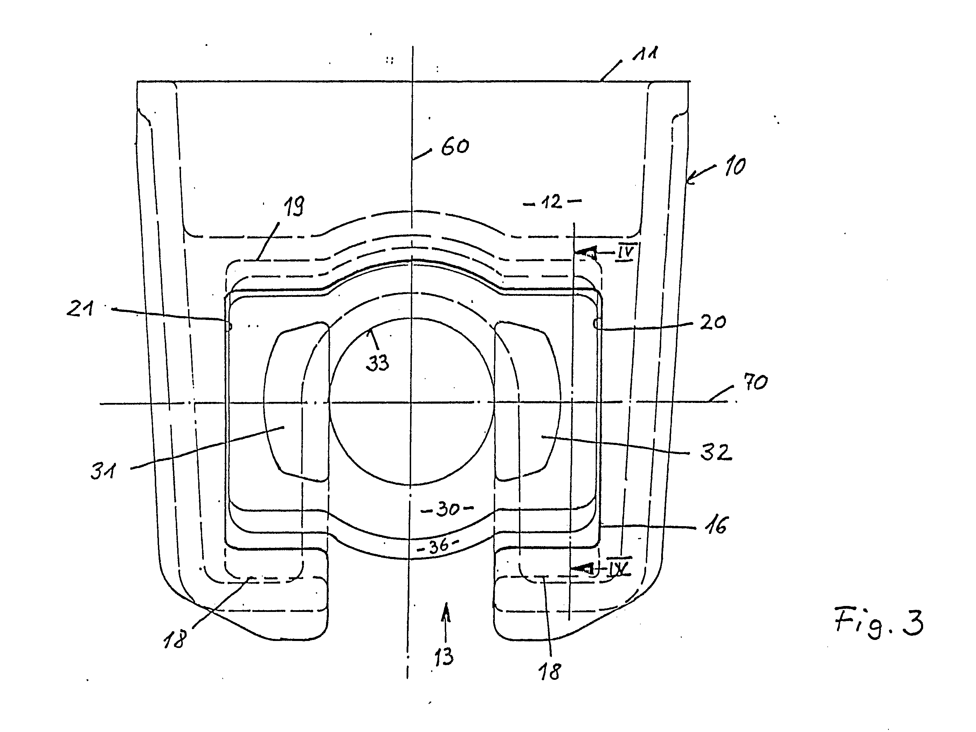

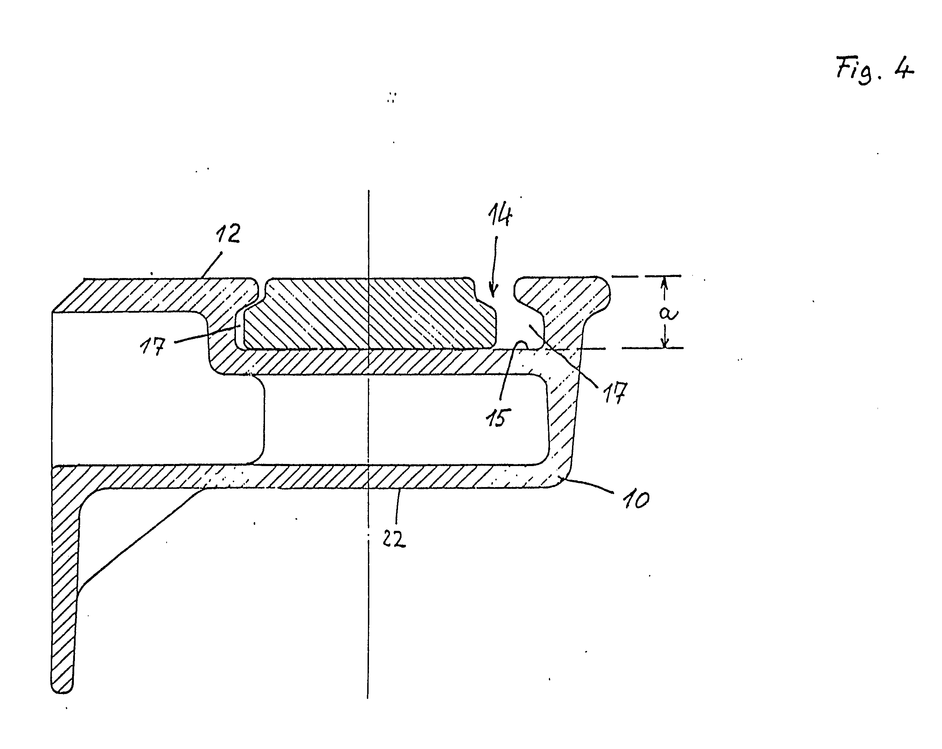

Die Verriegelung weist in üblicher Weise ein Gehäuse 10 mit Rückwand 11 auf, über die das Gehäuse am Rahmen beispielsweise eines Schienenfahrzeuges befestigt wird. Die ebene Oberseite des Gehäuses bildet eine Aufstandsfläche 12 für einen nicht dargestellten Container-Eckbeschlag. An seiner Vorderseite weist das Gehäuse 10 einen vergleichsweise breiten Einschnitt 13 auf, der einem noch zu erläuternden Zweck dient. Ausgehend von der Aufstandsfläche 12 ist im Gehäuse 10 eine nach oben offene Mulde 14 vorgesehen (Fig. 4). Der Boden 15 der Mulde 14 verläuft parallel zur und in einem Abstand a unterhalb der Aufstandsfläche 12. Ausgehend von der von oben freiliegenden Berandung 16 der Mulde 14 (Fig. 3) ist die Mulde sowohl auf ihrer dem Einschnitt 13 als auch auf ihrer der Rückwand 11 zugekehrten Seite mit einer sich in das Innere des Gehäuses 10 erweiternden Hinterschneidung 17 versehen. Die Grenzen der Hinterschneidung 17 sind in Fig. 3 mit gestrichelten Linien dargestellt, die der vorderen inneren Begrenzungswand 18 bzw. der hinteren Begrenzungswand 19 der Mulde 14 entsprechen. Die beiden anderen Begrenzungswände 20, 21 der im wesentlichen viereckigen Mulde verlaufen weitgehend senkrecht von der äußeren Berandung 16 aus bis zum Boden 15 der Mulde, wie insbesondere in Fig. 2 zu sehen ist. Auf der Unterseite wird das Gehäuse 10 durch eine Spannfläche 22 begrenzt, die im wesentlichen parallel zur Aufstandsfläche verläuft.

Im Gehäuse 10 ist mehrteiliger Einsatz herausnehmbar gehalten. Dieser Einsatz besteht aus einem Führungselement 30, einem Spannbolzen 40 und einer Spannmutter 50.

Das Führungselement 30 ist in seiner Betriebsstellung innerhalb der Mulde 14 untergebracht. Seine Dicke entspricht der Tiefe a der Mulde, so daß seine Oberfläche in der Ebene der Aufstandsfläche 12 liegt. Aus der Oberfläche dieses Führungselementes 30 ragen die bei Container-Verriegelungen üblichen Führungssegmente 31, 32 nach oben vor. Sie dienen der Übertragung horizontaler Kräfte zwischen Fahrzeug und Container. Zwischen den beiden Führungssegmenten 31, 32 ist das Führungselement 30 durch eine vertikale Bohrung 33 durchsetzt.

In Fig. 3 ist die Querrichtung des aufsitzenden (nicht eingezeichneten ) Containers mit 60 und die entsprechende Längsrichtung mit 70 bezeichnet. Die parallel zur Querrichtung 60 verlaufenden Begrenzungswände 34, 35 des Führungselementes 30 verlaufen etwa senkrecht von der Oberseite zur Unterseite des Führungselementes und damit im wesentlichen parallel zu den entsprechenden Begrenzungswänden 20, 21 der Mulde 14.

Die sich in Längsrichtung 70 erstreckenden Begrenzungswände 36, 37 des Führungselementes 30 sind dagegen nach unten ausfallend gestaltet und folgen somit im wesentlichen der ihnen zugeordneten Kontur der vorderen bzw. hinteren Begrenzungswand 18, 19 der Mulde 14. In Längsrichtung 70 hat das Führungselement 30 etwa dieselbe Ausdehnung wie die Mulde 14. In Querrichtung 60 ist das Führungselement dagegen kleiner als die Mulde. Die Folge ist, daß das Führungselement 30 innerhalb der Mulde 14 in Querrichtung 60 verschiebbar ist. Das Führungselement 30 befindet sich in der in Fig. 3 gezeigten Stellung in seiner hinteren Endstellung, wie sie auch aus Fig. 4 entnehmbar ist. In dieser Stellung bewirkt die Hinterschneidung 17 der Mulde, daß das Führungselement 30 nicht vertikal nach oben aus der Mulde herausgenommen werden kann. Entsprechendes gilt für die — nicht gezeichnete — andere Endstellung des Führungselementes 30, wie man unschwer der Fig. 4 entnimmt. Die größte Abmessung des Führungselementes 30 in der Querrichtung 60 ist jedoch so gewählt, daß das Führungselement dann nach oben aus der Mulde 14 herausgenommen werden kann, wenn es mittig zwischen seinen beiden Endstellungen steht. Das bedeutet, daß das Führungselement 30 so dimensioniert ist, daß es vom Umfang her nicht größer als die Berandung 16 ist.

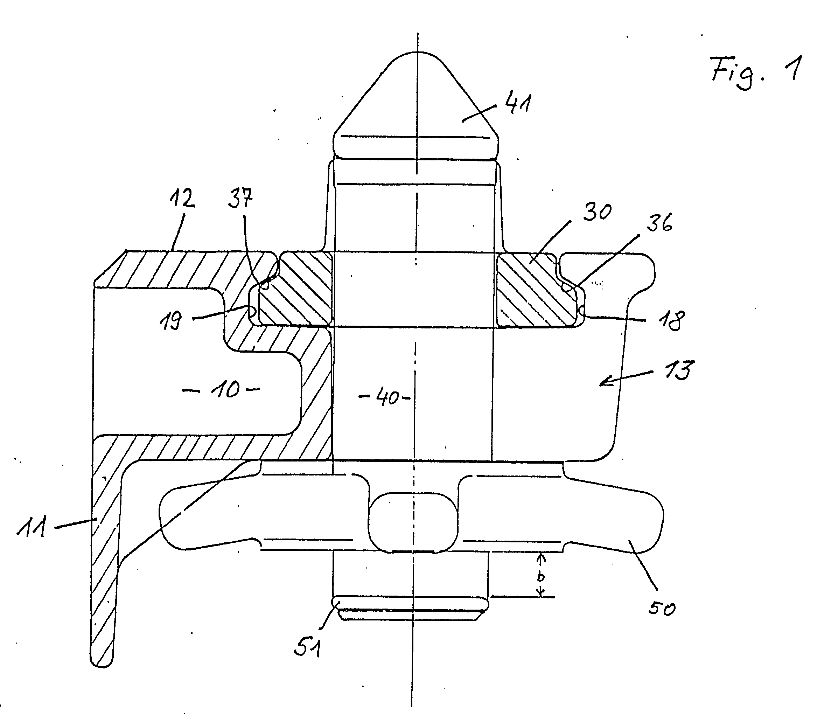

Der Spannbolzen 40 weist an seinem oberen Ende den bei derartigen Verriegelungen üblichen Hammerkopf 41 auf. Durch Verdrehen des Spannbolzens 40 kann er entweder die in Fig. 1 gezeichnete Position zum Aufsetzen und Abnehmen von Containern einnehmen oder aber die gestrichelt dargestellte Position in Fig. 2, in der der Hammerkopf 41 in den Zwischenraum zwischen den Führungssegmenten 31, 32 hineinfallen bzw. hineingezogen werden kann. In dieser Stellung des Hammerkopfes ist ein aufsitzender Container verriegelt. Durch Verdrehen der Spannmutter 50, die auf ein auf dem Spannbolzen 40 befindliches Gewinde aufgeschraubt ist, wird der Container über die Hammerkopf und seinen Eckbeschlag nach unten gezogen und fest gegenüber der Aufstandsfläche 12 verspannt. Bei aufsitzendem Container befindet sich das Führungselement 30 entweder in der in den Fig. 3 und 4 gezeigten Endstellung oder aber in der gegenüberliegenden nicht gezeigten Endstellung. Die Einnahme der zum Herausnehmen des Führungselementes 30 notwendige Mittelposition ist bei aufsitzendem Container ausgeschlossen. Der Grund hierfür ist folgender :

Die beschriebene Container-Verriegelung dient der Befestigung solcher Container, die entweder nach ISO-Norm oder nach den SEALAND-Spezifikationen (eingetragenes Warenzeichen) gebaut sind. Soweit es die Verriegelungen angeht, unterscheiden sich diese beiden Baunormen hinsichtlich des Mittenabstandes ihrer Eckbeschläge in der Querrichtung 60. Dieser Mittenabstand beträgt 90″ bei SEALAND-Containern und 89″ bei ISO-Containern. Da jedem Eckbeschlag eines Containers eine Verriegelung zugeordnet ist, muß das Führungselement jeder Verriegelung in Querrichtung 60 um 1/2″ verschiebbar sein, damit das Fahrzeug Container beider Ausführungen wahlweise transportieren kann. Es leuchtet somit ein, daß die Führungselemente 30 derartiger Verriegelungen nicht in ihre Mittelstellung gelangen können, sondern in einer ihrer beiden Endstellungen gehalten werden, wenn ein Container aufsitzt. Auch unter Berücksichtigung der zugelassenen Toleranzen und der Tatsache, daß die Öffnungsbreite des Eckbeschlages etwas größer als die entsprechende Breite der Führungssegmente 31, 32 ist, kann nach entsprechender Dimensionierung der Hinterschneidung 17 mit zugehörigen Begrenzungswänden des Führungselementes 30 mit Sicherheit ausgeschlossen werden, daß das Führungselement bei aufsitzendem Norm-Container jemals in seine Mittelstellung gelangt.

Diese Mittelstellung des Führungselementes 30 wird benötigt, um den aus den Teilen 30, 40 und 50 bestehenden Einsatz aus dem Gehäuse 10 herausnehmen zu können. Für die Herausnahme ist aber nicht nur die Mittelstellung des Führungselementes 30 erforderlich, sondern darüberhinaus, daß der Hammerkopf nach Abnehmen des Containers in die in Fig. 2 gestrichelt dargestellte Position gebracht und darüberhinaus die Spannmutter 50 gegen einen Anschlag 51 im Bereich des freien Endes des Spannbolzens gedreht wird. Nur wenn diese drei Bedingungen gleichzeitig erfüllt sind, ist ein Herausnehmen des Einsatzes möglich :

Unmittelbar nach dem Abnehmen des Containers steht der Hammerkopf 41 noch in seiner Zentrierstellung gemäß Fig. 1, in der die Spannpratzen des Hammerkopfes oben auf den Führungssegmenten 31, 32 aufliegen. Es ist jetzt möglich, den gesamten Einsatz in Querrichtung 60 bis zur mittleren Stellung des Führungselementes 30 zu verschieben. Schraubt man nun die Spannmutter 50 um das in Fig. 1 gezeigte Absenkmaß b nach unten gegen den Anschlag 51 und hebt Spannmutter und Spannbolzen dann um dieses Maß b an, dann stehen die Spannpratzen des Hammerkopfes in dem Abstand b über den Führungssegmenten 31, 32. Da aber die Dicke des Führungselementes gleich der Tiefe a der Mulde 14 ist und da weiterhin das Maß a größer als das Maß b ist, ist es noch ausgeschlossen, daß das Führungselement 30 ganz aus der Mulde 14 nach oben herausgehoben werden kann. Es wird vielmehr noch soweit in die Mulde hineinragen, wie es der Differenz a minus b entspricht. Erst wenn der Hammerkopf 41 in die Spann- oder Herausnahme-Position gemäß Fig. 2 verdreht ist, können seine Spannpratzen eine manuell bewirkte Aufwärtsbewegung des Führungselementes 30 nicht mehr behindern, wie es die gestrichelten Linien in Fig. 2 klar erkennen lassen. Mit von Hand hochgehaltenem Führungselement 30 gemäß Fig. 2 kann jetzt der gesamte Einsatz nach vorn auf den Betrachter zu (in Fig. 2) herausgenommen werden. Der Spannbolzen 40 bewegt sich dabei durch den Einschnitt 13, der auch die untere Spannfläche 22 des Gehäuses 10 durchsetzt. Das Einbringen eines Einsatzes in ein Leergehäuse läuft in umgekehrter Reihenfolge ab.

Wenn ein Einsatz während einer Fahrt ohne Container in seinem Gehäuse verbleiben soll, wird der Hammerkopf in die in Fig. 1 gezeigte Zentrierstellung gebracht und die Spannmutter 50 angezogen. Mit Hilfe einer — nicht eingezeichneten — Sicherung wird die Spannmutter 50 in ihrer gezeichneten Stellung festgehalten. Auf diese Weise wird nicht nur ein unerwünschtes Klappern eines unbenutzten Einsatzes verhindert, sondern auch sichergestellt, daß kein Einsatz sich selbsttätig löst und verlorengeht.

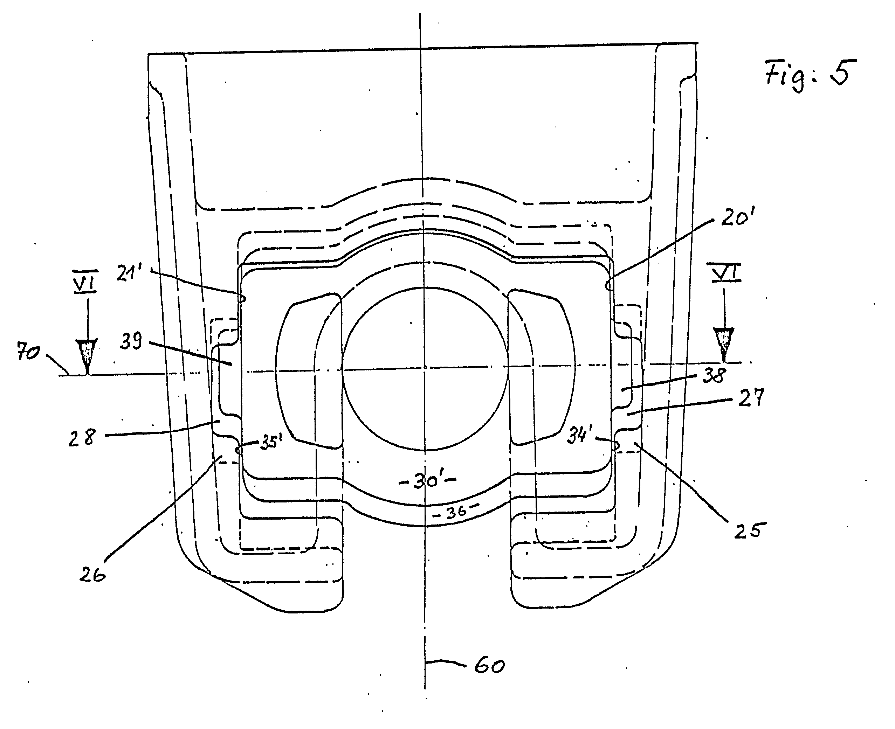

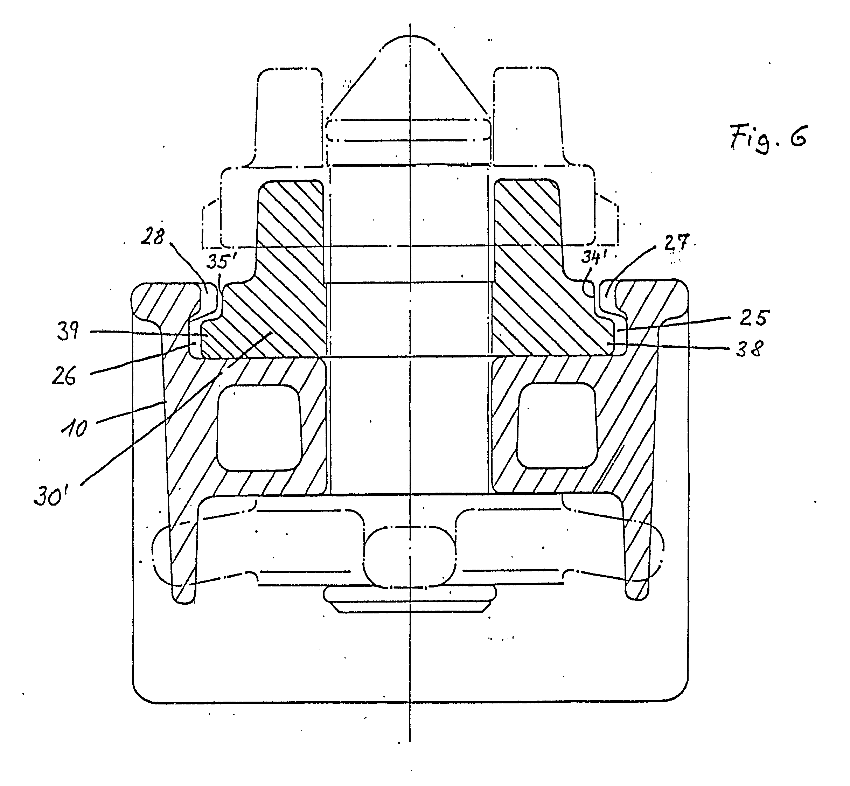

Das in den Fig. 5 bis 7 gezeigte Ausführungsbeispiel unterscheidet sich von dem zuvor beschriebenen durch eine zusätzliche Sicherung. Mit ihr wird verhindert, daß sich der Einsatz durch Schrägstellung seiner Teile bereits herausnehmen läßt (oder herausfallen kann), bevor das Führungselement seine Mittelposition einnimmt.

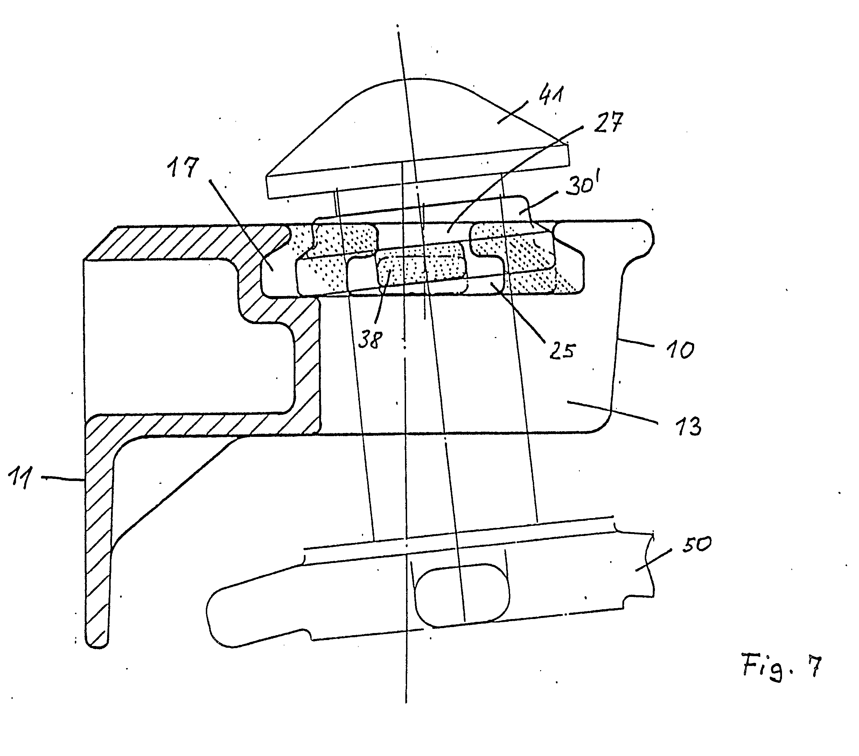

Zu diesem Zweck sind in die etwa senkrecht verlaufenden Begrenzungswände 20′, 21′ der Mulde 14′ des Gehäuses 10′ horizontale Nuten 25, 26 eingearbeitet, und von jeder dieser Nuten 25, 26 führt ein Kanal 27, 28 mit einer der Nutentiefe entsprechenden Tiefe bis zur Aufstandsfläche 12. In der Querrichtung 60 sind die beiden Nuten 25, 26 länger als die Kanalbreite, wie die Figuren 5 und 7 erkennen lassen.

Am Führungselement 30′ ragen von den vertikalen Begrenzungswänden 34′, 35′ in horizontaler Richtung Nocken 38, 39 in die Nuten 25, 26 hinein. Die Höhe der Nocken ist etwas geringer als die Tiefe der Nuten. Die Länge der Nocken in Querrichtung 60 ist etwas kleiner als die gleichgerichtete Breite der Kanäle 27, 28. Auf diese Weise ist es möglich, das Führungselement 30 in einer durch die Lage der Nuten und Nocken vorgegebenen Position in die Mulde 14′ einzusetzen. Wird das Führungselement 30′ anschliessend in der Querrichtung 60 verschoben, bewegen sich die Nocken 38, 39 in einen Bereich der Nuten 25, 26 außerhalb der Kanäle 27, 28, wie es in Fig. 5 dargestellt ist.

Auch bei diesem Ausführungsbeispiel müssen die obengenannten drei Bedingungen gleichzeitig erfüllt sein, um den Einsatz aus dem Gehäuse 10′ herausnehmen zu können. Bei dem zuletzt beschriebenen Ausführungsbeispiel kommt jedoch hinzu, daß der Einsatz weitgehend senkrecht stehen muß, um herausgenommen zu können. Fig. 7 zeigt, daß der Einsatz bei ganz heruntergedrehter Spannmutter 50 und querstehendem Hammerkopf 41 sowie bei mittig stehendem Führungselement 30 nicht herausnehmbar ist, weil eine Kante der Nocken gegen eine Seite des Kanals und gleichzeitig eine Kante des Führungselementes gegen den oberen Rand der Hinterschneidung 17 stößt. Der Zwang zu vertikaler Ausrichtung des Einsatzes wird also durch die relativen Abmessungen des Führungselementes 30′, der Mulde 14′, der Nocken 38, 39 und der Kanäle 27, 28 gewährleistet. Bei sehr enger Tolerierung der Abmessungen der Nocken und Kanäle könnte der Zwang sogar bereits allein hierdurch gewährleistet sein.

Aus dem Vorstehenden folgt, daß ein versehentliches Herausfallen eines Einsatzes bei Nichtgebrauch auch dann ausgeschlossen ist, wenn vergessen werden sollte, die Spannmutter festzuziehen oder wenn sich die Spannmutter wegen defekter Verdrehsicherung selbsttätig löst.

## Ansprüche

1. Verriegelung für Container, bestehend aus einem Gehäuse (10, 10′) mit Aufstandsfläche (12) für einen Container-Eckbeschlag, aus einem von oben durch die Aufstandsfläche in eine Ausnehmung (14, 14′) des Gehäuses einsetzbaren und in der Ausnehmung bewegbaren Führungselement (30, 30′) mit nach oben ragenden Führungssegmenten (31, 32) zum Eingriff in den Eckbeschlag und aus einem mit Hammerkopf (41) und Spannmutter (50) versehenen Spannbolzen (40), der das Führungselement durchsetzt und der durch einen das Gehäuse seitlich durchsetzenden Einschnitt (13) in das Gehäuse einsetzbar ist, dadurch gekennzeichnet, daß am Führungselement (30 ; 30′) eine Sperre (36, 37 und/oder 38, 39) und im Bereich der Ausnehmung (Mulde 14 ; 14′) im Gehäuse (10 ; 10′) eine Aufnahme (17 und/oder 25, 26, 27, 28) für diese Sperre vorgesehen ist, daß Sperre und Aufnahme eine das Einsetzen und Herausnehmen des Führungselementes unterbindende Formschluß-Verbindung zwischen Führungselement und Gehäuse bilden und daß die Formschluß-Verbindung durch Bewegung des Führungselementes aus seiner das Herausnehmen aus dem Gehäuse ermöglichenden Position in mindestens eine Betriebsstellung herstellbar ist.

2. Verriegelung nach Anspruch 1, dadurch gekennzeichnet, daß die Sperre am Führungselement (30) aus in dessen Bewegungsrichtung (60) vorspringenden Begrenzungswänden (36, 37) und die Aufnahme im Gehäuse aus mindestens einer in derselben Richtung verlaufenden Hinterschneidung (17) besteht.

3. Verriegelung nach Anspruch 1 oder 2, dadurch gekennzeichnet, daß die Sperre am Führungselement (30′) mindestens aus quer zu dessen Bewegungsrichtung (60) vorspringenden Nocken (38, 39) und die Aufnahme im Gehäuse mindestens aus sich in derselben Richtung im Gehäuse erstreckenden Nuten (25, 26) besteht, daß die Länge der Nuten größer als die Breite der Nocken ist und daß jeder Nut (25, 26) ein Kanal (27, 28) mit einer der Nockenbreite entsprechenden Breite zugeordnet ist, der von der Nut zur Aufstandsfläche (12) des Gehäuses (10) in einem Bereich verläuft, der der zum Einsetzen des Führungselementes dienenden Position des Führungselementes entspricht.

4. Verriegelung nach einem der Ansprüche 1 bis 3, dadurch gekennzeichnet, daß für das Führungselement (30 ; 30′) zwei Betriebsstellungen vorgesehen sind und für jede dieser Stellungen mindestens eine Sperre vorhanden ist.

5. Verriegelung nach einem der Ansprüche 1 bis 4, dadurch gekennzeichnet, daß das Maß (b) der axialen Bewegbarkeit der Spannmutter (50) zwischen ihrer Spannstellung in der Zentrierposition der Verriegelung (Fig. 1) und einem am freien Ende des Spannbolzens vorgesehenen Anschlag (51) kleiner ist, als die Dicke (a) des Führungselementes (30 ; 30′).

6. Verriegelung nach einem der Ansprüche 1 bis 5, dadurch gekennzeichnet, daß sich die Spannmutter (50) im gespannten Zustand der Verriegelung an einer Spannfläche (22) auf der Unterseite des Gehäuses (10 ; 10′) abstützt.

7. Verriegelung nach einem der Ansprüche 1 bis 6, dadurch gekennzeichnet, daß das Führungselement (30 ; 30′) in Längsrichtung (70) des Containers unverschiebbar in der Ausnehmung (14 ; 14′) gehalten ist.

8. Verriegelung nach einem der Ansprüche 1 bis 7, dadurch gekennzeichnet, daß das Führungselement (30 ; 30′) im Bereich seiner mittigen Bohrung (33) für den Spannbolzen beidseitig nach außen ausgeformt ist.

9. Verriegelung nach einem der Ansprüche 3 bis 8, dadurch gekennzeichnet, daß die Abmessung der Nocken (38, 39) in Richtung der Dicke des Führungselementes (30′) kleiner als diese Dicke ist und daß die Unterfläche der Nocken etwa in der Unterfläche des Führungselementes liegt.

10. Verriegelung nach einem der Ansprüche 1 bis 9, dadurch gekennzeichnet, daß das Führungselement (30 ; 30′) flächig auf einem Boden (15) des Gehäuses (10 ; 10′) aufliegt und daß der Einschnitt (13) auch den Boden (15) durchsetzt.

## Claims

1. A locking device for containers, consisting of a housing (10, 10′) with a supporting surface (12) for a container corner piece, a guiding element (30, 30′) with upwardly extending guiding segments (31, 32) for engagement in the corner piece, which can be introduced into a recess (14, 14′) in the housing and is movable in the recess, and a clamping bolt (40) provided with a hammer head (41) and a clamping nut (50) and which passes through the guide element and which can be introduced into the housing through a slot (13) passing laterally through the housing, characterised in that, a lock (36, 37 and/or 38, 39) is provided on the guide element (30 ; 30') and a receiver (17 and/or 25, 26, 27, 28) for the said lock is provided in the housing (10 ; 10') in the region of the recess (hollow 14 ; 14'), that the lock and the receiver form a positive connection between the guide element and the housing preventing the insertion and removal of the guide element and that the positive connection can be produced in at least one operative position by moving the guide element out of its position permitting the removal from the housing.

2. A locking device according to claim 1, characterised in that, the lock on the guide element (30) consists of boundary walls (36, 37) extending in its direction of movement (60) and the receiver in the housing consists of at least one undercut (17) extending in the same direction.

3. A locking device according to claim 1 or 2, characterised in that, the lock on the guide element (30') at least consists of cams (38, 39) projecting transversely with respect to its direction of movement (60) and the receiver in the housing at least consists of grooves (25, 26) extending in the housing in the same direction, that the length of the grooves is greater than the width of the cams and that each groove (25, 26) is associated with a channel (27, 28) having a width corresponding to the width of the cams and which extends from the groove up to the supporting surface (12) on the housing (10) in a region which corresponds to the position of the guide element serving for the insertion of the guide element.

4. A locking device according to one of claims 1 to 3, characterised in that, two operative positions are provided for the guide element (30 ; 30') and at least one lock is provided for each of the said positions.

5. A locking device according to one of claims 1 to 4, characterised in that, the extent (b) of the axial movability of the clamping nut (50) between its clamping position in the centering position of the locking device (Figure 1) and an abutment (51) provided at the free end of the clamping bolt is less than the thickness (a) of the guide element (30 ; 30').

6. A locking device according to one of claims 1 to 5, characterised in that, in the tightened condition of the locking device, the clamping nut (50) abuts a clamping surface (22) on the underside of the housing (10 ; 10').

7. A locking device according to one of claims 1 to 6, characterised in that, the guide element (30 ; 30') is immovably retained in the recess (14 ; 14') in the longitudinal direction (70) of the container.

8. A locking device according to one of claims 1 to 7, characterised in that, the guide element (30 ; 30') is outwardly contoured on both sides in the region of its central bore (33) for the clamping bolt.

9. A locking device according to one of claims 3 to 8, characterised in that, the dimension of the cams (38, 39) in the direction of the thickness of the guide element (30') is less than the said thickness and that the undersurface of the cams lies substantially within the undersurface of the guide element.

10. A locking device according to one of claims 1 to 9, characterised in that, the guide element (30 ; 30') lies flat on the base (15) of the housing (10 ; 10') and that the slot (13) also passes through the base (15).

### Revendications

1. Dispositif de verrouillage pour conteneur comprenant un carter (10, 10') avec surface d'appui en position dressée (12) pour une ferrure d'angle de conteneur, un élément de guidage (30, 30') pouvant être introduit, par le haut, à travers la surface d'appui, dans un évidement (14, 14') du carter, et mobile dans cet évidement, avec des segments de guidage (31, 32) saillants vers le haut, pour être engagés dans la ferrure d'angle, dispositif comprenant en outre un boulon de blocage (40), pourvu d'une tête en forme de marteau (41) et d'un écrou de blocage (50), qui traverse l'élément de guidage, et qui peut être inséré dans le carter (10) à travers une encoche (13) traversant latéralement le carter (10), dispositif caractérisé en ce que, sur l'élément de guidage (30, 30') est prévu un verrou (36, 37 et/ou 38, 39) ainsi que dans le domaine de l'évidement (en forme de cuvette 14, 14') du carter (10, 10') un logement (17 et/ou 25, 26, 27, 28) pour ce verrou, le verrou et son logement de réception formant une liaison par engagement de forme, entre l'élément de guidage et le carter, cette liaison s'opposant à une introduction ou un enlèvement de l'élément de guidage, mais pouvant être établie par déplacement de l'élément de guidage, hors de sa position permettant la sortie hors du carter, vers au moins une position de service interdisant cette sortie.

2. Dispositif de verrouillage suivant la revendication 1, caractérisé en ce que le verrou sur l'élément de guidage (30) consiste en parois de limitation (36, 37) saillants en direction de son déplacement (60) et leur logement de réception dans le carter consiste en au moins un découpage en retrait (17) s'étendant dans la même direction.

3. Dispositif de verrouillage suivant l'une des revendications 1 ou 2, caractérisé en ce que le verrou sur l'élément de guidage (30') consiste en au moins deux ergots (38, 39) saillants transversalement à la direction de son déplacement (60) et le logement de réception dans le carter consiste au moins en des gorges (25, 26) s'étendant dans la même direction, la longueur des gorges étant supérieure à la largeur des ergots et chaque gorge étant associée à un canal (27, 28) de largeur correspondant à la largeur des ergots, qui s'étend, à partir de la gorge, vers la surface d'appui (12) du carter, dans un domaine correspondant à la position de l'élément de guidage servant à la mise en jeu des segments de guidage.

4. Dispositif de verrouillage suivant l'une quelconque des revendications 1 à 3, caractérisé en ce que, pour l'élément de guidage (30, 30') sont prévues deux positions de service et, pour chacune de ces positions, est prévu au moins un verrou.

5. Dispositif de verrouillage suivant l'une quelconque des revendications 1 à 4, caractérisé en ce que la distance (b) de course axiale possible de l'écrou de blocage (50) entre sa position de blocage dans la position centrale du verrouillage, et une butée (51) prévue à l'extrémité libre du boulon de blocage, est inférieure à l'épaisseur (a) de l'élément de guidage (30, 30').

6. Dispositif de verrouillage suivant l'une quelconque des revendications 1 à 5, caractérisé en ce que l'écrou de blocage (50), à l'état bloqué du verrouillage, s'appuie contre une surface de serrage (22) prévue sur la face inférieure du carter (10, 10').

7. Dispositif de verrouillage suivant l'une quelconque des revendications 1 à 6, caractérisé en ce que l'élément de guidage (30, 30') peut être maintenu immobilisé en direction longitudinale (70) du conteneur dans l'évidement (14, 14').

8. Dispositif de verrouillage suivant l'une quelconque des revendications 1 à 7, caractérisé en ce que l'élément de guidage (30, 30') est conformé, dans la zone de son perçage central, de chaque côté, vers l'extérieur, pour la réception du boulon de blocage.

9. Dispositif de verrouillage suivant l'une quelconque des revendications 3 à 8, caractérisé en ce que la dimension des ergots (38, 39) en direction de l'épaisseur de l'élément de guidage (30') est inférieure à cette épaisseur, et la face inférieure des ergots affleure sensiblement avec la surface inférieure de l'élément de guidage.

10. Dispositif de verrouillage suivant l'une quelconque des revendications 1 à 9, caractérisé en ce que l'élément de guidage (30, 30') s'applique à plat sur un fond (15) du carter (10') et l'encoche (13) traverse également ce fond (15).

Fig. 1

Fig 2

0 037 466

Fig. 3

0 037 466

Fig. 4

0 037 466

Fig. 5

Fig. 6

Fig. 7

17 41 27 30' 25 38 10 13 11 50

0 037 466